# EUROPEAN PATENT APPLICATION

(11) **EP 4 691 864 A1**
(43) Date of publication of application: **11.02.2026**
(21) Application number: 23934655.4
(22) Date of filing: 28.04.2023
(51) Int. Cl.: B60T 13/74, B60L 7/18

(54) **BRAKING METHOD, RELATED APPARATUS, AND SYSTEM**

(71) Applicant: Shenzhen Yinwang Intelligent Technologies Co., Ltd., Shenzhen, Guangdong 518110 (CN)
(72) Inventor: LIU, Hanwen, Shenzhen, Guangdong 518129 (CN); XU, Yan, Shenzhen, Guangdong 518129 (CN); GUO, Zhenhua, Shenzhen, Guangdong 518129 (CN); WANG, Wei, Shenzhen, Guangdong 518129 (CN); ZHANG, Bingjian, Shenzhen, Guangdong 518129 (CN)
(74) Representative: Pfenning, Meinig & Partner mbB
(86) International application number: PCT/CN2023/091870
(87) International publication number: WO 2024/221466

(57) **Abstract**

A braking method is provided. The braking method is applied to a vehicle, and includes: determining a threshold of a braking energy recovery torque based on a driving mode of the vehicle; obtaining a braking request; determining a braking energy recovery torque value based on the braking request, where the braking energy recovery torque value is less than or equal to the threshold; and outputting a braking torque, where the braking torque is determined based on a total energy recovery torque value, and the total energy recovery torque value is a sum of the braking energy recovery torque value and a coasting energy recovery torque value. In the braking method, because the braking torque output by a motor during braking may be decreased based on the threshold of the braking energy recovery torque, a probability of locking of a wheel can be reduced. This reduces a probability of triggering a chassis function and improves experience of a driver. A braking apparatus related to the braking method, a vehicle, a computer-readable storage medium, and a computer program product are further included.

## Description

### TECHNICAL FIELD

This application relates to the field of vehicle technologies, and in particular, to a braking method, and a related apparatus and system.

### BACKGROUND

An electric vehicle usually has an energy recovery function. When the electric vehicle brakes or coasts, mechanical energy generated by the electric vehicle during movement may be recovered by using the function and converted into electric energy for storage. A reverse torque may be generated during energy recovery of a motor for braking of the electric vehicle.

A braking system of the electric vehicle can achieve braking effect based on an energy recovery torque of the motor and a hydraulic braking torque. However, when a current electric vehicle travels through a rough road section during braking, experience of a driver is poor.

### SUMMARY

This application provides a braking method, and a related apparatus and system, to reduce a probability of triggering a chassis function, so as to improve experience of a driver.

According to a first aspect, this application provides a braking method, applied to a vehicle. The method includes: determining a threshold of a braking energy recovery torque based on a driving mode of the vehicle; obtaining a braking request; determining a braking energy recovery torque value based on the braking request, where the braking energy recovery torque value is less than or equal to the threshold; and outputting a braking torque, where the braking torque is determined based on a total energy recovery torque value, and the total energy recovery torque value is a sum of the braking energy recovery torque value and a coasting energy recovery torque value.

In this embodiment, the braking energy recovery torque is a torque applied to a motor due to braking energy recovery, instead of a torque applied to the motor due to coasting energy recovery. Alternatively, in other words, the braking energy recovery torque in this embodiment is a torque applied to a shaft of the motor of the vehicle after the braking request is received.

A manner of obtaining the braking request is not limited in this embodiment. For example, when the vehicle is manually driven, the braking request may be a braking request triggered after a driver presses a braking pedal. For another example, when the vehicle is in an autonomous driving scenario, the braking request may alternatively be a braking request generated by the vehicle. For example, the braking request may be a braking request generated by the vehicle after sensing, planning, and decision-making.

In this embodiment, the threshold of the braking energy recovery torque is used to limit a braking energy recovery allowable value. The braking energy recovery allowable value is a value that is of the braking energy recovery torque and that is determined based on capabilities of a battery and the motor of the vehicle. That the threshold of the braking energy recovery torque is used to limit the braking energy recovery allowable value may be understood as that, when a value of the braking energy recovery torque (referred to as a braking energy recovery torque value) is determined, the determined braking energy recovery torque value needs to be less than or equal to the braking energy recovery allowable value, and also needs to be less than or equal to the threshold of the braking energy recovery torque. Alternatively, in other words, in this embodiment, the finally determined braking energy recovery torque value is less than or equal to a smallest value in the braking energy recovery allowable value and the threshold of the braking energy recovery torque.

A response speed of motor braking is faster than a response speed of hydraulic braking. Therefore, when the vehicle brakes, if a wheel bounces momentarily, a friction force on the wheel disappears. As a result, the wheel may be locked, and a chassis function is triggered. However, if the technical solution in this application is used, before the chassis function is triggered, the threshold that is of the braking energy recovery torque and that is determined based on the driving mode of the vehicle may be set to be less than the braking energy recovery allowable value. In other words, the braking energy recovery torque value allocated to the motor is decreased, and the hydraulic braking torque value allocated to the hydraulic apparatus is increased, to reduce a probability of locking of the wheel, so as to reduce a probability of triggering the chassis function, and improve experience of the driver.

With reference to the first aspect, in a possible implementation, determining the braking energy recovery torque value based on the braking request includes: determining the braking energy recovery allowable value, where the braking energy recovery allowable value is less than or equal to the threshold; and
determining the braking energy recovery torque value based on the braking request, where the braking energy recovery torque value is less than or equal to the braking energy recovery allowable value.

In other words, in this implementation, when a vehicle control unit of the vehicle indicates the braking energy recovery allowable value to a chassis controller, the indicated braking energy recovery allowable value is less than or equal to the threshold of the braking energy recovery torque. Correspondingly, when the chassis controller determines the braking energy recovery torque, the braking energy recovery torque determined by the chassis controller is less than or equal to the braking energy recovery allowable value.

With reference to the first aspect, in a possible implementation, the driving mode includes a first driving mode and a second driving mode, and the threshold includes a threshold corresponding to the first driving mode and a threshold corresponding to the second driving mode.

Optionally, the threshold corresponding to the first driving mode is the same as the threshold corresponding to the second driving mode.

Optionally, the threshold corresponding to the first driving mode is different from the threshold corresponding to the second driving mode.

It should be noted herein that the driving mode may further include more driving modes. For example, a driving mode in which a coasting energy recovery intensity is greater than 0.17 G is referred to as a driving mode 1, a driving mode in which the coasting energy recovery intensity is greater than 0.12 G but less than or equal to 0.17 G is referred to as a driving mode 2, and a driving mode in which the coasting energy recovery intensity is less than or equal to 0.12 G is referred to as a driving mode 3.

With reference to the first aspect, in a possible implementation, the first driving mode is a mode in which an energy recovery intensity is greater than a first intensity threshold, and the second driving mode is a mode in which the energy recovery intensity is less than or equal to the first intensity threshold. The threshold corresponding to the first driving mode is less than the threshold corresponding to the second driving mode.

With reference to the first aspect, in a possible implementation, determining the threshold of the braking energy recovery torque based on the driving mode of the vehicle includes: determining the threshold based on a road surface status and the driving mode.

For example, the road surface status includes any one of the following: a high-adhesion road surface (an adhesion coefficient is greater than 0.7), a medium-adhesion road surface (an adhesion coefficient is greater than 0.4 and less than or equal to 0.7), a low-adhesion road surface (an adhesion coefficient is greater than 0.25 and less than or equal to 0.4), and an extremely low-adhesion road surface (an adhesion coefficient is less than or equal to 0.25).

In this implementation, when the threshold of the braking energy recovery torque is determined, the driving mode is further considered, and the road surface status is further considered. Therefore, accuracy of the determined threshold of the braking energy recovery torque can be improved.

With reference to the first aspect, in a possible implementation, when the vehicle is in an unstable state, the method further includes: adjusting a braking torque, for the output braking torque to fall within a range from a preset value to the total energy recovery torque value.

The unstable state herein is a state in which a chassis function is not triggered although a chassis is unstable. In this application, that the vehicle is in the unstable state is also referred to as that the vehicle is in a chassis unstable state.

Generally, in addition to the braking energy recovery torque, the braking torque output by the motor further includes a coasting energy recovery torque. The value of the braking torque output by the motor is equal to the sum of the braking energy recovery torque value and a value of the coasting energy recovery torque (also referred to as a coasting energy recovery torque value).

It should be noted herein that the preset value described herein is not fixed. For example, the preset value may be updated in an update manner. In this case, the preset value herein is a value obtained after update. For example, the vehicle may update the preset value by using an over-the-air (over-the-air, OTA) technology.

In this implementation, the coasting energy recovery torque value is adjusted, so that the braking torque output by the motor can be further decreased. In this manner, a total braking torque (hydraulic braking torque+braking energy recovery torque+coasting energy recovery torque) of the vehicle is decreased. Therefore, a probability of locking of the wheel can be further reduced, to further reduce a probability of triggering the chassis function.

With reference to the first aspect, in a possible implementation, the method further includes: if the vehicle is still in an unstable state, decreasing the preset value to obtain a decreased preset value; and continuing to adjust the braking torque, for a value of the output braking torque to fall within a range from the decreased preset value to the total energy recovery torque value.

In other words, in this implementation, when it is determined that the vehicle is still in the unstable state, the preset value is decreased. In this manner, the total braking torque (hydraulic braking torque+braking energy recovery torque+coasting energy recovery torque) of the vehicle may be further decreased compared with the total braking torque of the vehicle corresponding to the preset value that is not decreased. Therefore, the probability of locking of the wheel can be further reduced, to further reduce the probability of triggering the chassis function.

With reference to the first aspect, in a possible implementation, the threshold is 0, and the total energy recovery torque value is equal to the coasting energy recovery torque value.

With reference to the first aspect, in a possible implementation, the threshold is greater than 0, and after the braking torque is output, the method further includes: if the vehicle is still in an unstable state, adjusting the threshold until the vehicle is out of the unstable state, where a threshold obtained after each adjustment is used to adjust the total energy recovery torque value.

For example, when the threshold is adjusted, and when the vehicle is in the unstable state, a first threshold is updated to a second threshold, and the second threshold is used as the threshold of the braking energy recovery torque. The first threshold is a threshold obtained after the threshold is adjusted last time, and the second threshold is less than the first threshold.

With reference to the first aspect, in a possible implementation, when the vehicle is out of the unstable state, determining the threshold of the braking energy recovery torque based on the driving mode of the vehicle includes: updating the first threshold to a third threshold, and using the third threshold as the threshold of the braking energy recovery torque, where the first threshold is the threshold obtained after the threshold is adjusted last time, and the third threshold is greater than the first threshold.

According to a second aspect, this application provides a braking method, applied to a motor controller. The motor controller is configured in a vehicle, and the method includes: obtaining a total energy recovery torque value, where the total energy recovery torque value is a sum of a braking energy recovery torque value and a coasting energy recovery torque value; controlling a motor to output a braking torque, where the braking torque is determined based on the total energy recovery torque value; and adjusting the braking torque when the vehicle is in an unstable state, for the output braking torque to fall within a range from a preset value to the total energy recovery torque value.

With reference to the second aspect, in a possible implementation, the method further includes: if the vehicle is still in the unstable state, decreasing the preset value to obtain a decreased preset value; and adjusting the braking torque, for a value of the output braking torque to fall within a range from the decreased preset value to the total energy recovery torque value.

According to a third aspect, this application provides a braking method, applied to a vehicle control unit. The vehicle control unit is configured in a vehicle, and the method includes: determining a threshold of a braking energy recovery torque based on a driving mode of the vehicle; obtaining a braking energy recovery torque value, where the braking energy recovery torque value is determined based on a braking request, and the braking energy recovery torque value is less than or equal to the threshold; and indicating a total energy recovery torque value to a motor controller, for the motor controller to control a motor to output a braking torque, where the total energy recovery torque value is a sum of the braking energy recovery torque value and a coasting energy recovery torque value.

With reference to the third aspect, in a possible implementation, after determining the threshold of the braking energy recovery torque based on the driving mode of the vehicle, the method further includes: indicating a braking energy recovery allowable value to a chassis controller of the vehicle, where the braking energy recovery allowable value is less than or equal to the threshold. Obtaining the braking energy recovery torque value includes: obtaining the braking energy recovery torque value from the chassis controller, where the braking energy recovery torque value is less than or equal to the braking energy recovery allowable value.

With reference to the third aspect, in a possible implementation, the driving mode includes a first driving mode and a second driving mode, and the threshold includes a threshold corresponding to the first driving mode and a threshold corresponding to the second driving mode.

With reference to the third aspect, in a possible implementation, the first driving mode is a mode in which an energy recovery intensity is greater than a first intensity threshold, and the second driving mode is a mode in which the energy recovery intensity is less than or equal to the first intensity threshold. The threshold corresponding to the first driving mode is less than the threshold corresponding to the second driving mode.

With reference to the third aspect, in a possible implementation, determining the threshold of the braking energy recovery torque based on the driving mode of the vehicle includes: determining the threshold based on a road surface status and the driving mode.

With reference to the third aspect, in a possible implementation, the threshold is greater than 0, and after indicating the total energy recovery torque value to the motor controller, the method further includes: if the vehicle is still in an unstable state, adjusting the threshold until the vehicle is out of the unstable state, where a threshold obtained after each adjustment is used to adjust the total energy recovery torque value.

With reference to the third aspect, in a possible implementation, determining the threshold of the braking energy recovery torque based on the driving mode of the vehicle includes: when the vehicle is in the unstable state, updating a first threshold to a second threshold, and using the second threshold as the threshold of the braking energy recovery torque, where the first threshold is a threshold obtained after the threshold is adjusted last time, and the second threshold is less than the first threshold.

With reference to the third aspect, in a possible implementation, when the vehicle is out of the unstable state, determining the threshold of the braking energy recovery torque based on the driving mode of the vehicle includes: updating the first threshold to a third threshold, and using the third threshold as the threshold of the braking energy recovery torque, where the first threshold is the threshold obtained after the threshold is adjusted last time, and the third threshold is greater than the first threshold.

According to a fourth aspect, this application provides a braking apparatus, where the apparatus includes: a processing module, configured to determine a threshold of a braking energy recovery torque based on a driving mode of the vehicle; and an obtaining module, configured to obtain a braking request. The processing module is further configured to determine a braking energy recovery torque value based on the braking request, where the braking energy recovery torque value is less than or equal to the threshold. The processing module is further configured to output a braking torque, where the braking torque is determined based on a total energy recovery torque value, and the total energy recovery torque value is a sum of the braking energy recovery torque value and a coasting energy recovery torque value.

With reference to the fourth aspect, in a possible implementation, the processing module is further configured to: determine a braking energy recovery allowable value, where the braking energy recovery allowable value is less than or equal to the threshold; and determine the braking energy recovery torque value based on the braking request, where the braking energy recovery torque value is less than or equal to the braking energy recovery allowable value.

With reference to the fourth aspect, in a possible implementation, the driving mode includes a first driving mode and a second driving mode, and the threshold includes a threshold corresponding to the first driving mode and a threshold corresponding to the second driving mode.

With reference to the fourth aspect, in a possible implementation, the first driving mode is a driving mode in which an energy recovery intensity is greater than a first intensity threshold, and the second driving mode is a driving mode in which the energy recovery intensity is less than or equal to the first intensity threshold. The threshold corresponding to the first driving mode is less than the threshold corresponding to the second driving mode.

With reference to the fourth aspect, in a possible implementation, the processing module is further configured to determine the threshold based on a road surface status and the driving mode.

With reference to the fourth aspect, in a possible implementation, when the vehicle is in an unstable state, the processing module is further configured to adjust the braking torque, for the output braking torque to fall within a range from a preset value to the total energy recovery torque value.

With reference to the fourth aspect, in a possible implementation, the processing module is further configured to: if the vehicle is still in an unstable state, decrease the preset value to obtain a decreased preset value; and adjust the braking torque, for a value of the output braking torque to fall within a range from the decreased preset value to the total energy recovery torque value.

With reference to the fourth aspect, in a possible implementation, the threshold is 0, and the total energy recovery torque value is equal to the coasting energy recovery torque value.

With reference to the fourth aspect, in a possible implementation, the threshold is greater than 0, and after the braking torque is output, the processing module is further configured to: when the vehicle is still in an unstable state, adjust the threshold until the vehicle is out of the unstable state, where a threshold obtained after each adjustment is used to adjust the total energy recovery torque value.

With reference to the fourth aspect, in a possible implementation, the processing module is further configured to: when the vehicle is in the unstable state, update a first threshold to a second threshold, and use the second threshold as the threshold of the braking energy recovery torque, where the first threshold is a threshold obtained after the threshold is adjusted last time, and the second threshold is less than the first threshold.

With reference to the fourth aspect, in a possible implementation, when the vehicle is out of the unstable state, the processing module is further configured to: when the vehicle is out of the unstable state, update the first threshold to a third threshold, and use the third threshold as the threshold of the braking energy recovery torque, where the first threshold is the threshold obtained after the threshold is adjusted last time, and the third threshold is greater than the first threshold.

According to a fifth aspect, this application provides a braking apparatus, used in a motor controller. The motor controller is configured in a vehicle, and the apparatus includes: an obtaining module, configured to obtain a total energy recovery torque value, where the total energy recovery torque value is a sum of a braking energy recovery torque value and a coasting energy recovery torque value; and a processing module, configured to control a motor to output a braking torque, where the braking torque is determined based on the total energy recovery torque value. The processing module is further configured to adjust the braking torque when the vehicle is in an unstable state, for the output braking torque to fall within a range from a preset value to the total energy recovery torque value.

With reference to the fifth aspect, in a possible implementation, the processing module is further configured to: if the vehicle is still in an unstable state, decrease the preset value to obtain a decreased preset value; and adjust the braking torque, for a value of the output braking torque to fall within a range from the decreased preset value to the total energy recovery torque value.

According to a sixth aspect, this application provides a braking apparatus, used in a vehicle control unit. The vehicle control unit is configured in a vehicle, and the apparatus includes: a processing module, configured to determine a threshold of a braking energy recovery torque based on a driving mode of the vehicle; and an obtaining module, configured to obtain a braking energy recovery torque value, where the braking energy recovery torque value is determined based on a braking request, and the braking energy recovery torque value is less than or equal to the threshold. The processing module is further configured to indicate a total energy recovery torque value to the motor controller, for the motor controller to control the motor to output a braking torque, where the total energy recovery torque value is a sum of the braking energy recovery torque value and a coasting energy recovery torque value.

With reference to the sixth aspect, in a possible implementation, after determining the threshold of the braking energy recovery torque based on the driving mode of the vehicle, the processing module is further configured to indicate a braking energy recovery allowable value to a chassis controller of the vehicle, where the braking energy recovery allowable value is less than or equal to the threshold. The obtaining module is further configured to obtain the braking energy recovery torque value from the chassis controller, where the braking energy recovery torque value is less than or equal to the braking energy recovery allowable value.

With reference to the sixth aspect, in a possible implementation, the driving mode includes a first driving mode and a second driving mode, and the threshold includes a threshold corresponding to the first driving mode and a threshold corresponding to the second driving mode.

With reference to the sixth aspect, in a possible implementation, the first driving mode is a mode in which an energy recovery intensity is greater than a first intensity threshold, and the second driving mode is a mode in which the energy recovery intensity is less than or equal to the first intensity threshold. The threshold corresponding to the first driving mode is less than the threshold corresponding to the second driving mode.

With reference to the sixth aspect, in a possible implementation, the processing module is further configured to determine the threshold based on a road surface status and the driving mode.

With reference to the sixth aspect, in a possible implementation, the threshold is greater than 0, and after indicating the total energy recovery torque value to the motor controller, the processing module is further configured to: if the vehicle is still in an unstable state, adjust the threshold until the vehicle is out of the unstable state, where a threshold obtained after each adjustment is used to adjust the total energy recovery torque value.

With reference to the sixth aspect, in a possible implementation, the processing module is further configured to: when the vehicle is in the unstable state, update a first threshold to a second threshold, and use the second threshold as the threshold of the braking energy recovery torque, where the first threshold is a threshold obtained after the threshold is adjusted last time, and the second threshold is less than the first threshold.

With reference to the sixth aspect, in a possible implementation, when the vehicle is out of the unstable state, the processing module is further configured to: update the first threshold to a third threshold, and use the third threshold as the threshold of the braking energy recovery torque, where the first threshold is the threshold obtained after the threshold is adjusted last time, and the third threshold is greater than the first threshold.

According to a seventh aspect, an embodiment of this application provides a braking apparatus, including a memory, a processor, and a communication interface. The memory is configured to store program instructions. The processor is configured to invoke the program instructions in the memory to perform the method according to the first aspect, the second aspect, the third aspect, or any possible implementation of the first aspect, the second aspect, and the third aspect.

According to an eighth aspect, this application provides a vehicle, including the braking apparatus according to the fourth aspect, the fifth aspect, the sixth aspect, or the seventh aspect.

According to a ninth aspect, an embodiment of this application provides a chip, including at least one processor and a communication interface. The communication interface and the at least one processor are interconnected through a line. The at least one processor is configured to run a computer program or instructions, to perform the method according to the first aspect, the second aspect, the third aspect, or any possible implementation of the first aspect, the second aspect, and the third aspect.

According to a tenth aspect, this application provides a computer-readable medium. The computer-readable medium stores program code for computer execution, and the program code includes instructions used for performing the method according to the first aspect, the second aspect, the third aspect, or any possible implementation of the first aspect, the second aspect, and the third aspect.

According to an eleventh aspect, this application provides a computer program product. The computer program product includes computer program code, and when the computer program code is run on a computer, the computer is enabled to implement the method according to the first aspect, the second aspect, the third aspect, or any possible implementation of the first aspect, the second aspect, and the third aspect.

### BRIEF DESCRIPTION OF DRAWINGS

FIG. 1 is a diagram of an architecture of a braking system according to this application;
FIG. 2 is a diagram of an application scenario to which a braking control method according to this application is applicable;
FIG. 3 is a schematic flowchart of a braking method according to this application;
FIG. 4 is a diagram of an architecture of another braking system according to this application;
FIG. 5 is a schematic flowchart of another braking method according to this application;
FIG. 6 is a diagram of a structure of a braking apparatus according to this application; and
FIG. 7 is a diagram of a structure of another braking apparatus according to this application.

### DESCRIPTION OF EMBODIMENTS

For ease of understanding, terms in embodiments of this application are first described.

### 1. Vehicle control unit (vehicle control unit, VCU)

The vehicle control unit is a central control unit of a new energy vehicle, and is the core of a control system. The VCU can collect a motor status and a battery status, collect an acceleration pedal signal, a braking pedal signal, an actuator signal, and a sensor signal, comprehensively analyze the signals based on an intent of a driver and make corresponding decisions, and can further monitor actions of controllers of lower-layer components. The VCU is used for normal traveling, braking energy feedback, energy management, network management, fault diagnosis and processing of a vehicle engine and a power battery, vehicle status monitoring, and the like. This ensures that the vehicle works normally and stably in a state of good power, high cost-effectiveness, and high reliability.

### 2. Braking energy recovery

The driver presses a braking pedal, and a recovery system recovers excess energy released by the vehicle in a braking process.

### 3. Braking energy recovery torque

A torque applied to a motor shaft due to braking energy recovery is referred to as a braking energy recovery torque.

### 4. Coasting energy recovery

An acceleration pedal and the braking pedal are in a released state, and energy is recovered in a vehicle coasting process.

### 5. Coasting energy recovery torque

A torque applied to the motor shaft due to coasting energy recovery is referred to as a coasting energy recovery torque.

### 6. Braking energy recovery allowable value

Due to a low temperature or the like, a recharging capability of a battery is limited. To prevent overcharging of the battery, recovery power of a motor needs to be limited. The VCU determines a maximum value of the braking energy recovery torque based on a current capability of the battery and a current capability of the motor. The value may also be referred to as a braking energy recovery torque limit value.

The following describes the technical solutions in this application with reference to the accompanying drawings.

Braking of a new energy vehicle, as a type of vehicle that is developing rapidly today, is directly related to traffic safety. Braking of the vehicle means that the traveling vehicle is forcibly decelerated or even stopped based on a requirement of a driver or a controller.

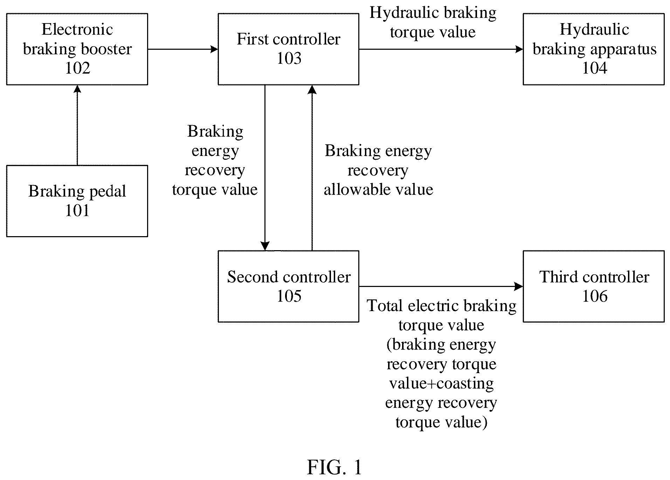

FIG. 1 is a diagram of an architecture of a braking system in an automobile according to this application. As shown in FIG. 1, a braking system 100 includes a braking pedal 101, an electronic braking booster 102, a first controller 103, a hydraulic braking apparatus 104, a second controller 105, and a third controller 106.

In this application, an example in which the first controller 103 is a chassis controller 103, the second controller 105 is a vehicle control unit 105, and the third controller 106 is a motor controller 106 is used for description.

For the braking system 100 shown in FIG. 1, a braking principle is as follows.

When a driver presses the braking pedal 101, the electronic braking booster 102 of a chassis is triggered to send a braking request to the chassis controller 103.

After receiving the braking request, the chassis controller 103 determines a value of a hydraulic braking torque and a value of a braking energy recovery torque based on a braking energy recovery allowable value previously sent by the vehicle control unit, and indicates the determined value of the hydraulic braking torque to the hydraulic braking apparatus 104 and the determined value of the braking energy recovery torque to the vehicle control unit 105.

When receiving the value that is of hydraulic braking torque and that is indicated by the chassis controller 103, the hydraulic braking apparatus 104 performs hydraulic braking based on the value of the hydraulic braking torque.

When receiving the value that is of the braking energy recovery torque and that is indicated by the chassis controller 103, the vehicle control unit 105 determines a value of a total energy recovery torque (also referred to as a value of a total electric braking torque) in combination of a calculated value of a coasting energy recovery torque, and indicates the value of the total electric braking torque to the motor controller 106. The value of the total electric braking torque is equal to a sum of the value of the braking energy recovery torque and the value of the coasting energy recovery torque.

When receiving the value that is of the total electric braking torque and that is indicated by the vehicle control unit 105, the motor controller 106 controls, based on the value of the total electric braking torque, a motor to output an electric braking torque, to perform motor braking.

It can be learned that, for the braking system shown in FIG. 1, when the vehicle brakes, a value of a total braking torque applied to a wheel is a sum of the hydraulic braking torque value, the value of the braking energy recovery torque, and the value of the coasting energy recovery torque.

Alternatively, in other words, when the vehicle brakes, a total braking torque applied to the wheel may include two parts: a total energy recovery torque (or also referred to as a total electric braking torque) and a hydraulic braking torque. The total energy recovery torque (or also referred to as a total electric braking torque) further includes a braking energy recovery torque and a coasting energy recovery torque.

For the chassis controller 103 in FIG. 1, when the value of the hydraulic braking torque and the value of the braking energy recovery torque are determined based on the braking energy recovery allowable value previously indicated by the vehicle control unit, a principle of optimal energy recovery is generally followed. To be specific, when the value of the hydraulic braking torque and the value of the braking energy recovery torque are determined based on the braking energy recovery allowable value previously sent by the vehicle control unit, the braking energy recovery torque is preferentially used for meeting a braking requirement. For example, when a requested deceleration is less than 0.3G, braking is allowed to be implemented by motor braking.

G represents a gravity acceleration value, and 1G=9.80665 m/s^2. Therefore, 0.3G=0.3*9.8m/s^2=2.94 m/s^2.

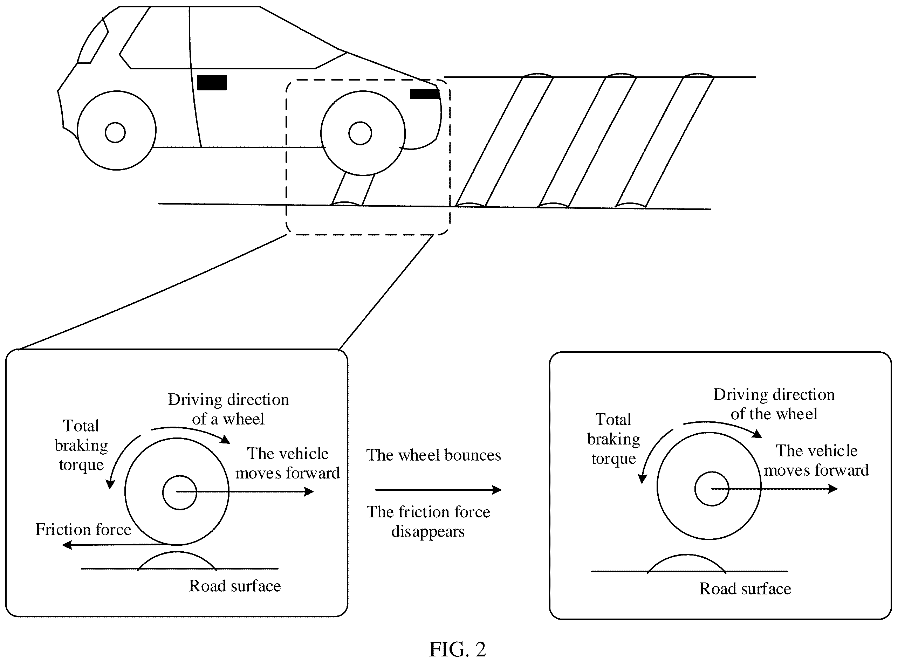

However, when the current vehicle brakes, the following problem occurs: When the vehicle brakes, the wheel may bounce momentarily. For example, as shown in FIG. 2, when the vehicle brakes, if the vehicle travels through a rough road section, the wheel may bounce momentarily. When the wheel bounces, a friction force on the wheel disappears. In this case, only the total braking torque (whose value is the sum of the hydraulic braking torque value, the braking energy recovery torque value, and the coasting energy recovery torque value) is applied, causing the wheel to have a lock trend. This triggers a chassis function of the vehicle, for example, triggers an anti-lock braking system (anti-lock braking system, ABS) or an electronic stability system (for example, a dynamic tractive control (dynamic tractive control, DTC) system).

When the chassis function is triggered, the vehicle exits an energy recovery function, and the value of the braking energy recovery torque and the value of the coasting energy recovery torque are directly cleared to 0, so that the value of the total braking torque applied to the wheel is decreased. However, in this case, a deceleration of the vehicle during braking does not meet a requirement of the driver. As a result, the driver lurches forward. This affects experience of the driver. In addition, after the vehicle exits the energy recovery function, it takes long time (for example, 30 seconds) for the vehicle to return to a state before the vehicle exits the energy recovery function. In this case, to maintain deceleration consistency, the driver needs to actively press the braking pedal heavily. If the driver does not perform an operation in a timely manner, control safety is affected, and serious accidents such as skidding and rear-end collisions may occur.

In view of this, this application provides a braking method, and a related apparatus and system, to reduce a probability of triggering a chassis function, so as to improve experience of a driver.

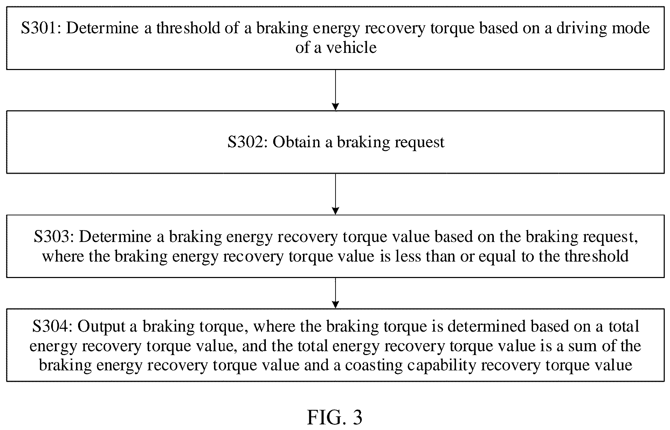

The following describes the braking method provided in this application with reference to FIG. 3. The braking method may be performed by a vehicle.

It should be noted herein that a specific form of the vehicle is not limited in this embodiment. For example, the vehicle may be a pure electric vehicle, or a hybrid vehicle, or may be a public traffic vehicle, a car, a human-driving vehicle, or an autonomous driving vehicle.

The method may be performed by a braking system in the vehicle, and the braking system includes a vehicle control unit, a motor controller, and a chassis controller.

As shown in FIG. 3, the method includes S301, S302, S303, and S304.

S301: Determine a threshold of a braking energy recovery torque based on a driving mode of the vehicle.

This step may be performed by the vehicle control unit of the vehicle, for example, performed by the vehicle control unit 105 in the braking system shown in FIG. 1.

A vehicle powered by a motor generally has an energy recovery function. This function includes coasting energy recovery and braking energy recovery.

The coasting energy recovery means that, when a braking pedal is in a released state, the vehicle recovers energy generated in a coasting process. The braking energy recovery means that the vehicle recovers energy generated in a braking process.

In this embodiment, the braking energy recovery torque is a torque applied to the motor due to the braking energy recovery, instead of a torque applied to the motor due to the coasting energy recovery. Alternatively, in other words, the braking energy recovery torque in this embodiment is a torque applied to a shaft of the motor of the vehicle after a braking request is received. In a human-driving scenario, the braking energy recovery torque in this embodiment is a torque applied to the shaft of the motor of the vehicle after the driver presses the braking pedal.

In this embodiment, the vehicle control unit determines the threshold of the braking energy recovery torque based on the driving mode of the vehicle.

Specifically, the threshold of the braking energy recovery torque is used to limit a braking energy recovery allowable value. The braking energy recovery allowable value is a value that is of braking energy recovery torque and that is determined by the vehicle control unit based on capabilities of a battery and the motor of the vehicle. For how to determine the value of the braking energy recovery torque based on the capabilities of the battery and the motor of the vehicle, refer to descriptions in a related technology. Details are not described herein.

That the threshold of the braking energy recovery torque is used to limit the braking energy recovery allowable value may be understood as that, when the value of the braking energy recovery torque is determined based on the braking energy recovery allowable value, the determined value of the braking energy recovery torque needs to be less than or equal to the braking energy recovery allowable value, and also needs to be less than or equal to the threshold of the braking energy recovery torque. Alternatively, in other words, in this embodiment, the finally determined value of the braking energy recovery torque is less than or equal to a smallest value in the braking energy recovery allowable value and the threshold of the braking energy recovery torque.

In this embodiment, for ease of description, the value of the braking energy recovery torque is also referred to as a braking energy recovery torque value.

For example, if the threshold that is of the braking energy recovery torque and that is determined based on the driving mode of the vehicle is 10 Newton meters, and the braking energy recovery allowable value is 20 Newton meters, the braking energy recovery torque value cannot be greater than 10 Newton meters.

For another example, if the threshold of the braking energy recovery torque determined based on the driving mode of the vehicle is 0 Newton meters, and the braking energy recovery allowable value is 20 Newton meters, the braking energy recovery torque value cannot be greater than 0 Newton meters. In other words, in this case, it may be considered that a total braking torque generated by the motor does not include the braking energy recovery torque.

For another example, if the braking energy recovery torque value determined based on the driving mode of the vehicle is 20 Newton meters, and the braking energy recovery allowable value is 10 Newton meters, the braking energy recovery torque value cannot be greater than 10 Newton meters.

It should be noted herein that how to define the driving mode is not limited in this embodiment.

For example, the vehicle control unit may determine the driving mode based on a coasting energy recovery intensity during the coasting energy recovery.

For example, a driving mode in which the coasting energy recovery intensity is greater than 0.17G is referred to as a driving mode 1, a driving mode in which the coasting energy recovery intensity is greater than 0.12G but less than or equal to 0.17G is referred to as a driving mode 2, and a driving mode in which the coasting energy recovery intensity is less than or equal to 0.12G is referred to as a driving mode 3.

In the foregoing examples, 0.17G, 0.12G, 10 Newton meters, 10 Newton meters, and 0 Newton meters are merely examples, and may be replaced with, for example, other numbers, and do not constitute a limitation on this application.

In addition, it is further noted herein that the driving mode 1, the driving mode 2, and the driving mode 3 in this example are merely examples of names. For example, the driving mode 1 may also be referred to as a high-energy recovery driving mode, the driving mode 2 may be referred to as a medium-energy recovery driving mode, and the driving mode 3 may be referred to as a low-energy recovery driving mode.

Optionally, the driving mode in this embodiment includes a first driving mode and a second driving mode. The first driving mode is a driving mode in which an energy recovery intensity is greater than a first intensity threshold, and the second driving mode is a driving mode in which the energy recovery intensity is less than or equal to the first intensity threshold. A threshold corresponding to the first driving mode is less than a threshold corresponding to the second driving mode.

It should be noted herein that a manner of determining, by the vehicle control unit, the threshold of the braking energy recovery torque based on the driving mode of the vehicle is not limited in this embodiment.

In a first implementation solution, a first mapping relationship between the driving mode and the threshold of the braking energy recovery torque may be set. Optionally, different driving modes correspond to different thresholds. Then, when the vehicle brakes, after determining a current driving mode, the vehicle control unit may use, as a threshold of the braking energy recovery torque in this step, a threshold corresponding to the current driving mode in the first mapping relationship.

In a second implementation solution, a second mapping relationship between the driving mode and an allowable coefficient of the braking capability recovery allowable value may be set. Then, when the vehicle brakes, after determining a current driving mode, the vehicle control unit may use, as the threshold of the braking energy recovery torque in this step, a product of the allowable coefficient corresponding to the current driving mode in the second mapping relationship and the braking capability recovery allowable value.

Optionally, when determining the threshold of the braking energy recovery torque, the vehicle control unit considers not only the driving mode, but also a road surface condition during traveling of the vehicle. In other words, that the vehicle control unit determines the threshold of the braking energy recovery torque based on the driving mode of the vehicle includes: determining the threshold of the braking energy recovery torque based on the driving mode of the vehicle and the road surface condition during traveling of the vehicle. It should be noted herein that the road surface condition described herein is merely an example, and may also be replaced with another affecting factor.

Optionally, when the threshold of the braking energy recovery torque is determined based on the driving mode of the vehicle and the road surface condition during traveling of the vehicle, in the first implementation solution, a third mapping relationship between the driving mode, the road surface condition during traveling of the vehicle, and the threshold of the braking energy recovery torque may be set. Then, when the vehicle brakes, after determining the current driving mode and the road surface condition during traveling of the vehicle, the vehicle control unit may use, as the threshold of the braking energy recovery torque in this step, the threshold corresponding to the current driving mode and the road surface condition during traveling of the vehicle in the third mapping relationship.

Optionally, when the threshold of the braking energy recovery torque is determined based on the driving mode of the vehicle and the road surface condition during traveling of the vehicle, in the second implementation solution, a fourth mapping relationship between the driving mode, the road surface condition during traveling of the vehicle, and the allowable coefficient of the braking capability recovery allowable value may be set. Then, when the vehicle brakes, after determining the current driving mode and the road surface condition during traveling of the vehicle, the vehicle control unit may use, as the threshold of the braking energy recovery torque in this step, a product of the allowable coefficient corresponding to the current driving mode and the road surface condition during traveling of the vehicle in the fourth mapping relationship and the braking capability recovery allowable value.

In an example, it is assumed that types of the driving mode include the driving mode 1, the driving mode 2, and the driving mode 3, and types of the roadside situation include a high-adhesion road surface (an adhesion coefficient is greater than 0.7), a medium-adhesion road surface (an adhesion coefficient is greater than 0.4 and less than or equal to 0.7), a low-adhesion road surface (an adhesion coefficient is greater than 0.25 and less than or equal to 0.4), and an extremely low-adhesion road surface (an adhesion coefficient is less than or equal to 0.25). Table 1 shows a mapping relationship between the driving mode, the road surface condition during traveling of the vehicle, and the allowable coefficient.

**Table 1**

| | Driving mode 1 | Driving mode 2 | Driving mode 3 |
|---|---|---|---|
| High-adhesion road surface | The allowable coefficient is 0 | The allowable coefficient is 0.7 | The allowable coefficient is 0.9 |
| Medium-adhesion road surface | The allowable coefficient is 0 | The allowable coefficient ranges from 0.4 to 0.7 | The allowable coefficient ranges from 0.6 to 0.9 |
| Low-adhesion road surface | The allowable coefficient is 0 | The allowable coefficient is 0 | The allowable coefficient ranges from 0.45 to 0.6 |
| Extremely low-adhesion road surface | The allowable coefficient is 0 | The allowable coefficient is 0 | The allowable coefficient is 0 |

In this case, if the vehicle control unit determines that the current driving mode is the driving mode 1, and the road surface condition is the low-adhesion road surface, it may be first determined, based on Table 1, that the corresponding allowable value is 0, and then a product of 0 and a default braking capability recovery allowable value is used as the threshold of the braking energy recovery torque in this step.

S302: Obtain a braking request.

This step may be performed by the chassis controller in the vehicle.

It should be noted herein that a source of the vehicle braking request is not limited in this embodiment.

For example, when the vehicle is manually driven, the braking request may be a braking request generated after the driver presses the braking pedal. In this embodiment, the generated braking request is also referred to as a triggered braking request.

For another example, when the vehicle is in an autonomous driving scenario, the braking request is a braking request generated by the vehicle. For example, the braking request may be a braking request generated by the vehicle after sensing, planning, and decision-making. For example, if it is determined, based on collected information, that braking is required when a traffic light is red at a front crossroad and a current vehicle speed is excessively high, the vehicle generates the braking request.

S303: Determine the braking energy recovery torque value based on the braking request, where the braking energy recovery torque value is less than or equal to the threshold.

This step may be performed by the chassis controller.

Generally, after the vehicle receives the braking request, the chassis controller determines, based on the braking request, a value of a hydraulic braking torque allocated to a hydraulic braking apparatus and a value of a braking energy recovery torque allocated to the motor, so that the hydraulic braking apparatus performs hydraulic braking and/or the motor performs motor braking.

In this embodiment, for ease of description, the value of the hydraulic braking torque is also referred to as a hydraulic braking torque value.

In this embodiment, when the chassis controller allocates the hydraulic braking torque value and allocates the braking energy recovery torque value allocated to the motor, the allocated braking energy recovery torque value, as described in S501, needs to be less than or equal to a smallest value in the threshold of the braking energy recovery torque and the braking energy recovery allowable value.

It should be noted herein that, a specific manner of allocating the braking energy recovery torque value by the chassis controller is not limited in this embodiment.

In an implementation solution, after determining the braking energy recovery allowable value and the braking energy recovery threshold, the vehicle control unit separately indicates the braking energy recovery allowable value and the braking energy recovery threshold to the chassis controller. Then, when determining the braking energy recovery torque, the chassis controller makes the determined braking energy recovery torque less than or equal to the smallest value in the threshold of the braking energy recovery torque and the braking energy recovery allowable value.

For example, after receiving the braking request, the chassis controller determines, through parsing, that a sum of the braking energy recovery torque value of the motor and the hydraulic braking torque value is 100, and the vehicle control unit indicates, to the chassis controller, that the threshold of the braking energy recovery torque is 20 and the braking energy recovery allowable value is 15. In this case, the chassis controller first determines that 15 is the smallest value, and then makes the braking energy recovery torque value allocated to the motor less than or equal to 15.

In another implementation solution, when determining the braking energy recovery allowable value, the vehicle control unit further considers the threshold of the braking energy recovery torque. To be specific, the vehicle control unit determines the braking energy recovery allowable value based on the battery, the motor, and the threshold of the braking energy recovery torque. The determined braking energy recovery allowable value is less than or equal to the threshold of the braking energy recovery torque. Then, the vehicle control unit indicates only the braking energy recovery allowable value to the chassis controller. In the second implementation solution, the braking energy recovery allowable value has been limited by the braking energy recovery torque threshold, but this step is performed by the vehicle control unit. Correspondingly, after receiving the braking energy recovery allowable value indicated by the vehicle control unit, the chassis controller makes the braking energy recovery torque value allocated to the motor less than or equal to the braking energy recovery allowable value.

For example, after the braking request is received, it is determined, through parsing, that the sum of the braking energy recovery torque value of the motor and the hydraulic braking torque value is 100, and after determining that the threshold of the braking energy recovery torque is 0 and the braking energy recovery allowable value is 15, the vehicle control unit indicates, to the chassis controller, that the braking energy recovery allowable value is 0. In this case, the chassis controller makes the braking energy recovery torque value allocated to the motor less than or equal to 0. In this example, it is equivalent to that 100 is all allocated to the hydraulic braking apparatus. Further, if it is assumed that the coasting energy recovery torque is 0, from the perspective of vehicle braking, there is only hydraulic braking but no motor braking.

S304: Output a braking torque, where the braking torque is determined based on a total energy recovery torque value, and the total energy recovery torque value is a sum of the braking energy recovery torque value and the coasting energy recovery torque value.

This step may be performed by a motor controller and the motor of the vehicle.

In this step, the motor controller controls the braking torque output by the motor, and the braking torque is also referred to as an electric braking torque.

Generally, after determining the braking energy recovery torque value, the chassis controller indicates the braking energy recovery torque value to the vehicle control unit. Then, the vehicle control unit determines a value of a total energy recovery torque in combination of a calculated value of a coasting energy recovery torque (for example, obtained through calculation based on "PedalMAP"), and indicates the value of the total energy recovery torque to the motor controller. The value of the total energy recovery torque is equal to the sum of the value of the braking energy recovery torque and the value of the coasting energy recovery torque. Correspondingly, after receiving the value of the total energy recovery torque indicated by the vehicle control unit, the motor controller controls the motor to output the braking torque. A value of the braking torque output by the motor is equal to the total energy recovery torque value.

For ease of description, in this embodiment, the value of the coasting energy recovery torque is also referred to as a coasting energy recovery torque value, and the value of the total energy recovery torque is also referred to as a total energy recovery torque value.

Optionally, when the threshold that is of the braking energy recovery torque and that is determined based on the driving mode of the vehicle is 0, the total energy recovery torque value in this case is equal to the coasting energy recovery torque value.

It can be learned that, in the braking method provided in this embodiment, when the vehicle brakes, and when the vehicle control unit of the vehicle determines the braking energy recovery torque value allocated to the motor, the braking energy recovery torque value allocated to the motor not only needs to be less than or equal to the braking energy recovery allowable value, but also needs to be less than or equal to the threshold of the braking energy recovery torque. Alternatively, in other words, in this embodiment, the braking energy recovery torque value allocated to the motor is less than or equal to the smallest value in the braking energy recovery allowable value and the threshold of the braking energy recovery torque.

A response speed of motor braking is faster than a response speed of hydraulic braking. Therefore, when the vehicle brakes, if a wheel bounces momentarily, a friction force on the wheel disappears. As a result, the wheel may be locked, and a chassis function is triggered. However, if the technical solution in this application is used, before the chassis function is triggered, the threshold that is of the braking energy recovery torque and that is determined based on the driving mode of the vehicle may be set to be less than the braking energy recovery allowable value. In other words, the braking energy recovery torque value allocated to the motor is decreased, and the hydraulic braking torque value allocated to the hydraulic apparatus is increased, to reduce a probability of locking of the wheel, so as to reduce a probability of triggering the chassis function, and improve experience of the driver.

As described in the foregoing embodiment, in addition to the braking energy recovery torque, the braking torque output by the motor further includes the coasting energy recovery torque. The value of the braking torque output by the motor is equal to the sum of the braking energy recovery torque value and the coasting energy recovery torque value.

Therefore, in an optional embodiment, after the vehicle outputs the braking torque by using the braking method in FIG. 3, if the vehicle is still in an unstable state, the braking torque output by the motor may be further adjusted, so that the output braking torque falls within a range from a preset value to the total energy recovery torque value.

It should be noted that the unstable state in this application is instability before the chassis function is triggered. Alternatively, that the vehicle is in the unstable state may be understood as instability before the chassis function is triggered.

Optionally, when the motor controller adjusts the braking torque output by the motor, so that the output braking torque falls within the range from the preset value to the total energy recovery torque value, the motor controller may adjust, within preset duration, the braking torque output by the motor, so that the output braking torque falls within the range from the preset value to the total energy recovery torque value.

For example, if the preset value is 20, a braking torque value received by the motor controller is 70, and the braking torque is all from coasting energy recovery (the threshold of the braking energy recovery torque is 0). In this case, if it is determined that the vehicle is in the unstable state, the motor controller may control the value of the braking torque output by the motor to fall within a range of [20, 70].

That is, in this embodiment, the motor controller may adjust (or perform short-time adjustment) the coasting energy recovery torque value output by the motor, so that the braking torque output by the motor can be further decreased. In this manner, a total braking torque (hydraulic braking torque+braking energy recovery torque+coasting energy recovery torque) of the vehicle is also decreased. Therefore, the probability of locking of the wheel can be further reduced, to further reduce the probability of triggering the chassis function.

It should be noted herein that the preset value and the braking torque value 70 are merely examples, may be replaced with other numbers, and do not constitute a limitation on this application.

Optionally, after the braking torque output by the motor is adjusted, the method in this application may further include: if the vehicle is still in the unstable state, decreasing the preset value to obtain a decreased preset value; and adjusting the braking torque, for the value of the output braking torque to fall within a range from the decreased preset value to the total energy recovery torque value.

An example in which the foregoing preset value is 20, the braking torque value received by the motor controller is 70, and the braking torque is all from the coasting energy recovery (the threshold of the braking energy recovery torque is 0) is still used for description. After adjustment is performed once, if the vehicle is still in the unstable state, in this case, the motor controller may decrease 20 to 10, and then the motor controller may control, within the preset duration, the value of the braking torque output by the motor to be within a range of [10, 70].

In other words, in this embodiment, when the vehicle is still in the unstable state, the motor controller decreases the preset value, to control the braking torque output by the motor to be further decreased. In this manner, the total braking torque (hydraulic braking torque+braking energy recovery torque+coasting energy recovery torque) of the vehicle may be further decreased compared with the total braking torque of the vehicle corresponding to the preset value that is not decreased. Therefore, the probability of locking of the wheel can be further reduced, to further reduce the probability of triggering the chassis function.

Optionally, the braking torque output by the motor may be adjusted when the threshold of the braking energy recovery torque is 0. Alternatively, in other words, when the threshold of the braking energy recovery torque is 0, the braking torque output by the motor may be adjusted by performing short-time adjustment on the value of the energy recovery torque.

When the threshold of the braking energy recovery torque is 0, the total energy recovery torque value is equal to the coasting energy recovery torque value.

It should be noted herein that a manner of determining instability is not limited in this embodiment. For example, instability may be determined based on an equivalent moment of inertia of the motor of the vehicle and/or a slip rate of the wheel of the vehicle.

If the equivalent moment of inertia of the motor exceeds a specific threshold, it is considered that a chassis is unstable (the vehicle is unstable).

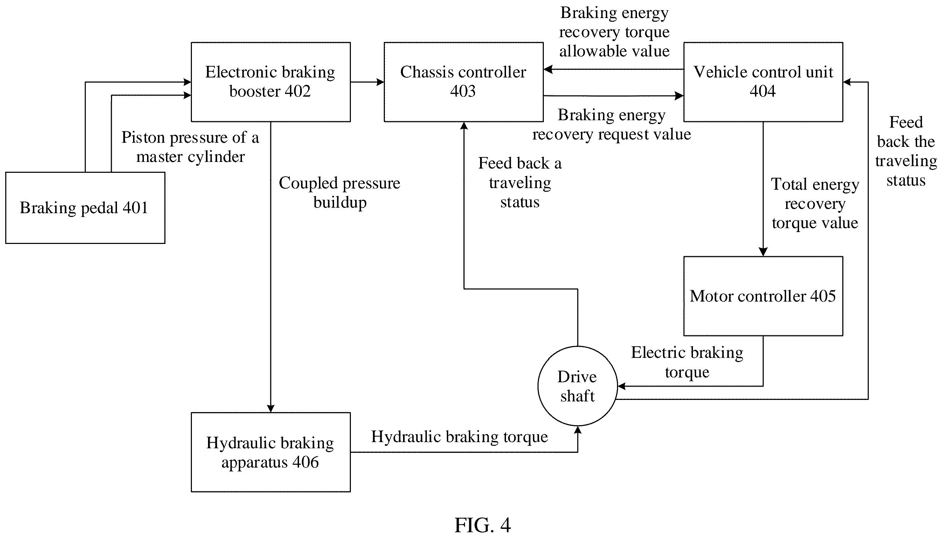

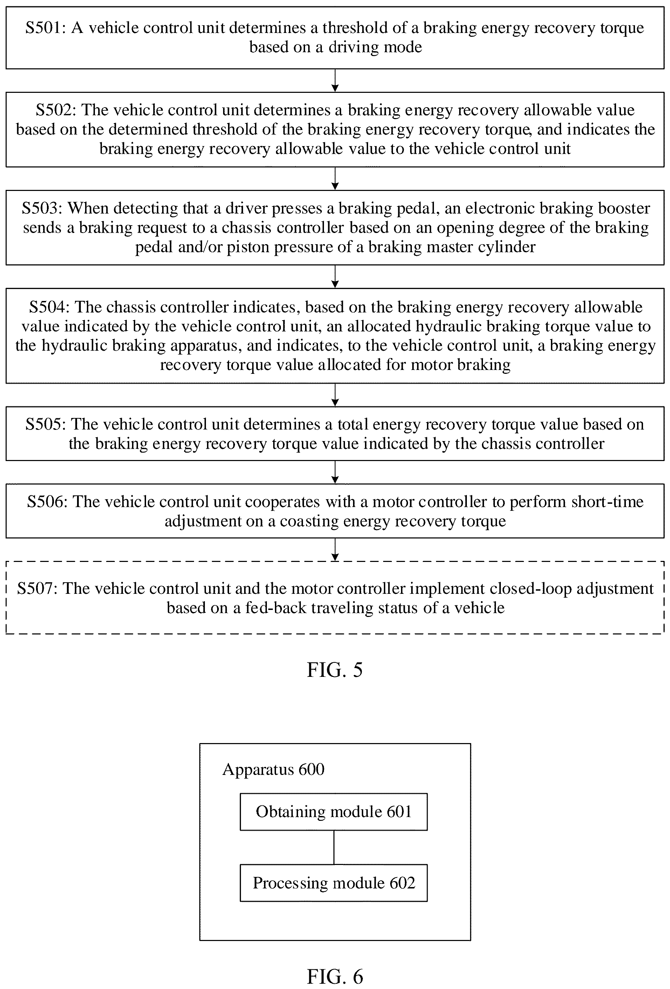

With reference to FIG. 4 and FIG. 5, the following describes a detailed embodiment of the braking method provided in this application.

FIG. 4 is a diagram of a system architecture that can perform a braking method in this application according to this application. FIG. 5 is the braking method provided with reference to FIG. 4.

As shown in FIG. 4, the system architecture includes a braking pedal 401, an electronic braking booster 402, a chassis controller 403, a vehicle control unit 404, a motor controller 405, and a hydraulic braking apparatus 406.

For example, the hydraulic braking apparatus 405 may include a braking master cylinder, a left-front wheel cylinder, a right-rear wheel cylinder, a right-front wheel cylinder, and a left-rear wheel cylinder. The hydraulic braking apparatus 405 may output a hydraulic braking torque, and apply the hydraulic braking torque to a drive shaft of the vehicle.

The motor controller 405 may control a motor to output a motor braking torque, and apply the motor braking torque to the drive shaft of the vehicle.

For the system architecture shown in FIG. 4, the braking method in this application includes the following steps.

S501: The vehicle control unit determines a threshold of a braking energy recovery torque based on a driving mode.

For example, in a high energy recovery driving mode, for example, in an energy saving mode or a single pedal mode, in consideration of stability, the threshold of the braking energy recovery torque is directly set to 0, to limit an electric braking function and increase a proportion of the hydraulic braking torque in a braking torque.

For detailed descriptions of this part, refer to the descriptions in S301 in the embodiment shown in FIG. 3.

S502: The vehicle control unit determines a braking energy recovery allowable value based on the determined threshold of the braking energy recovery torque, and indicates the braking energy recovery allowable value to the vehicle control unit.

In this embodiment, the determined braking energy recovery allowable value is less than or equal to the threshold of the braking energy recovery torque in S501.

For example, in the high energy recovery driving mode, it is determined that the threshold of the braking energy recovery torque is 0. In this case, the braking energy recovery allowable value indicated to the vehicle control unit is 0.

S503: When detecting that a driver presses a braking pedal, the electronic braking booster sends a braking request to the chassis controller based on an opening degree of the braking pedal and/or piston pressure of the braking master cylinder.

S504: The chassis controller indicates, based on the braking energy recovery allowable value indicated by the vehicle control unit, an allocated hydraulic braking torque value to the hydraulic braking apparatus, and indicates, to the vehicle control unit, a braking energy recovery torque value allocated for motor braking.

The braking energy recovery torque value that is allocated to the motor braking and that is indicated to the vehicle control unit is less than or equal to the braking energy recovery allowable value.

For example, when the threshold of the braking energy recovery torque determined based on the driving mode is 0, the braking energy recovery torque value for motor braking indicated by the chassis controller to the vehicle control unit is 0. That is, the chassis controller allocates, to the hydraulic braking apparatus, an entire value of the braking torque obtained through parsing based on the braking pedal.

S505: The vehicle control unit determines a total energy recovery torque value based on the braking energy recovery torque value indicated by the chassis controller.

The total energy recovery torque value is equal to a sum of the braking energy recovery torque value and a calculated coasting energy recovery torque.

For example, when the threshold of the braking energy recovery torque determined based on the driving mode is 0, the total energy recovery torque value is equal to the calculated coasting energy recovery torque value.

S506: The vehicle control unit cooperates with the motor controller to perform short-time adjustment on a coasting energy recovery torque.

Optionally, during implementation, in this step, when the threshold of the braking energy recovery torque is 0, the short-time adjustment may be performed on the coasting energy recovery torque.

For descriptions about how to perform the short-time adjustment on the coasting energy recovery torque, refer to the descriptions in the foregoing embodiments. Details are not described herein again.

It can be learned that, in this embodiment, a proportion of the braking energy recovery torque may be decreased and the proportion of the hydraulic braking torque may be increased by using the threshold of the braking energy recovery torque, to reduce a probability of triggering a chassis function. In addition, further, a proportion of the coasting energy recovery torque may be decreased by performing short-time adjustment on the coasting energy recovery torque. Therefore, on the basis of decreasing the proportion of the braking energy recovery torque, a value of the total braking torque (hydraulic braking torque value+braking energy recovery torque value+coasting energy recovery torque value) may be further decreased, to further reduce the probability of triggering the chassis function.

The foregoing operation is performed only once. Optionally, the method in this application may further include the following step.

S507: The vehicle control unit and the motor controller implement closed-loop adjustment based on a fed-back traveling status (used to determine whether instability occurs) of the vehicle.

The closed-loop adjustment herein specifically includes one or more of the following.
(1) When the previously determined threshold of the braking energy recovery torque is greater than 0, if it is determined that the vehicle is still in an unstable state, the threshold of the braking energy recovery torque continues to be adjusted, where a threshold obtained after each adjustment is used to adjust the total energy recovery torque value.

For example, in an adjustment manner, if it is determined that the vehicle is still in the unstable state, determining the threshold of the braking energy recovery torque based on the driving mode of the vehicle includes: updating a first threshold to a second threshold; and using the second threshold as the threshold of the braking energy recovery torque, where the first threshold is a threshold obtained after the threshold is adjusted last time, and the second threshold is less than the first threshold.

For example, if the threshold that is of the braking energy recovery torque and that is determined by the vehicle control unit last time is 40, and 40 is indicated to the chassis controller, the hydraulic braking torque value allocated by the chassis controller to the hydraulic braking apparatus is 60, and the hydraulic braking torque value allocated by the chassis controller to the motor is 40. In this case, if it is determined that the vehicle still has an unstable trend, the vehicle control unit continues to decrease the threshold.

In this adjustment manner, the proportion of the hydraulic braking torque value can be further increased. Therefore, a probability of locking of a wheel is further reduced, and the probability of triggering the chassis function is further reduced.

(2) When the previously determined threshold of the braking energy recovery torque is 0, if it is determined that the vehicle is still in the unstable state, the short-time adjustment may continue to be performed on the coasting energy recovery torque.

For example, if the threshold of the braking energy recovery torque determined by the vehicle control unit last time is 0 and the coasting energy recovery torque is 20, in this case, if it is determined that the vehicle still has the unstable trend, the vehicle control unit decreases 20 to 0.

In this adjustment manner, the value of the total braking torque (hydraulic braking torque+braking energy recovery torque+coasting energy recovery torque) can be further decreased, to further reduce the probability of triggering the chassis function.

(1) and (2) may also be combined. That is, if it is determined that the vehicle is still in the unstable state after the adjustment, the threshold may be adjusted, and the short-time adjustment may be performed on the coasting energy recovery torque.

Optionally, the method in this application may further include: if the vehicle is out of the unstable state, for example, after the vehicle bounces, determining the threshold of the braking energy recovery torque based on the driving mode of the vehicle includes: updating the first threshold to a third threshold; and using the third threshold as the threshold of the braking energy recovery torque, where the first threshold is the threshold obtained after the threshold is adjusted last time, and the third threshold is less than the first threshold.

For example, if the threshold that is of the braking energy recovery torque and that is determined by the vehicle control unit last time is 20, and 20 is indicated to the chassis controller, the hydraulic braking torque value allocated by the chassis controller to the hydraulic braking apparatus is 80, and the hydraulic braking torque value allocated to the motor is 20. In this case, if it is determined that the vehicle is out of the unstable state, the vehicle control unit increases the threshold of the braking energy recovery torque, for example, from 20 to 40.

In this manner, a braking effect of the vehicle can be ensured when the vehicle is not in the unstable state.

Optionally, for the embodiment shown in FIG. 5, when determining that the vehicle is unstable, the chassis controller may exit braking energy recovery, and switches to the hydraulic braking torque.

Optionally, after the vehicle is out of the unstable state (for example, after the vehicle travels through an unstable road surface), hysteresis time of specific duration may be set, to prevent driving inconsistency and discomfort caused by short-time frequent and rapid adjustment.

Optionally, feedforward preview adjustment may be performed by using a fusion sensing technology. When it is detected that the vehicle is about to travel through the unstable road surface, electric braking energy recovery is completely prohibited, and deceleration is completely implemented by hydraulic pressure. This can effectively improve braking stability.

The following describes an example based on the braking method described in the embodiment in FIG. 5. In a traveling process of the vehicle, if the vehicle control unit determines that the vehicle is currently in the high energy recovery driving mode, the vehicle control unit determines the threshold of the braking energy recovery torque as 0, limits the braking energy recovery allowable value to 0, and indicates 0 to the chassis controller. Then, when the vehicle brakes, the chassis controller allocates, to the hydraulic braking apparatus, the entire braking torque obtained through parsing based on the braking pedal, to increase a proportion of hydraulic braking. In addition, after the vehicle control unit indicates the calculated coasting energy recovery torque to the motor controller, the motor controller further performs short-time rapid adjustment on the value of the coasting energy recovery torque, to decrease the braking torque output by the motor, so as to decrease the total braking torque.

In this example, because the proportion of hydraulic braking is increased, and the proportion of the braking energy recovery torque is decreased, the probability of triggering the chassis function can be reduced. In addition, because the short-time adjustment is further performed on the coasting energy recovery torque to decrease the total braking torque, the probability of triggering the chassis function can be further reduced. This improves experience of the driver.

In this example, an example in which the short-time adjustment is performed only once is used for description. Alternatively, the short-time adjustment may be performed a plurality of times by detecting the unstable state in real time. This does not constitute a limitation on this application.

The braking methods provided in embodiments of this application are described above with reference to FIG. 3 to FIG. 5. For example, Table 2 is a comparison, provided in this application, between not limiting the braking energy recovery allowable value by using the threshold of the braking energy recovery torque and limiting the braking energy recovery allowable value by using the braking energy recovery torque.

**Table 2**

| Test scenario | Evaluation indicator | Not limit the braking energy recovery allowable value by using the threshold of the braking energy recovery torque | Limit the braking energy recovery allowable value by using the braking energy recovery torque |
|---|---|---|---|
| Speed bump | ABS trigger probability | 100% | 11% |
| | DTC trigger probability | 43% | 0% |
| | Standard deviation of an acceleration | ~1.55 | ~1.25 |
| | Electric-hydraulic conversion delay | 200 ms | 0 ms |
| Composite road surface | ABS trigger times | 22 | 3 |
| | DTC trigger times | 12 | 0 |
| Sprinkled extremely low-adhesion road surface | Yaw rate peak value | 2.62 | 1.04 |

It can be learned from Table 2 that, after the braking energy recovery allowable value is limited by using the braking energy recovery torque, a probability of triggering an anti-lock braking system (anti-lock braking system, ABS)/dynamic tractive control (dynamic tractive control, DTC) can be effectively reduced on the speed bump and the composite road surface, a standard deviation of a longitudinal acceleration change can be decreased, and an electrichydraulic conversion delay can be decreased. This improves stability of the vehicle.

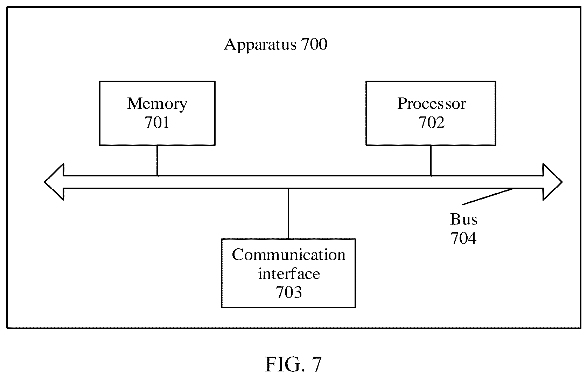

The following describes a braking apparatus provided in this application with reference to FIG. 6 and FIG. 7.

FIG. 6 is a diagram of a structure of a braking apparatus according to an embodiment of this application. As shown in FIG. 6, an apparatus 600 includes an obtaining module 601 and a processing module 602.

In a first embodiment, the braking apparatus is used in a vehicle.

The processing module 602 is configured to determine a threshold of a braking energy recovery torque based on a driving mode of the vehicle. The obtaining module 601 is configured to obtain a braking request. The processing module 602 is further configured to determine a braking energy recovery torque value based on the braking request, where the braking energy recovery torque value is less than or equal to the threshold. The processing module 602 is further configured to output a braking torque, where the braking torque is determined based on a total energy recovery torque value, and the total energy recovery torque value is a sum of the braking energy recovery torque value and a coasting energy recovery torque value.

In a possible implementation, the processing module 602 is further configured to: determine a braking energy recovery allowable value, where the braking energy recovery allowable value is less than or equal to the threshold; and determine the braking energy recovery torque value based on the braking request, where the braking energy recovery torque value is less than or equal to the braking energy recovery allowable value.

In a possible implementation, the driving mode includes a first driving mode and a second driving mode, and the threshold includes a threshold corresponding to the first driving mode and a threshold corresponding to the second driving mode.

In a possible implementation, the first driving mode is a driving mode in which an energy recovery intensity is greater than a first intensity threshold, and the second driving mode is a driving mode in which the energy recovery intensity is less than or equal to the first intensity threshold. The threshold corresponding to the first driving mode is less than the threshold corresponding to the second driving mode.

In a possible implementation, the processing module 602 is further configured to determine the threshold based on a road surface status and the driving mode.

In a possible implementation, when the vehicle is in an unstable state, the processing module 602 is further configured to adjust the braking torque, for the output braking torque to fall within a range from a preset value to the total energy recovery torque value.

In a possible implementation, the processing module 602 is further configured to: if the vehicle is still in an unstable state, decrease the preset value to obtain a decreased preset value; and adjust the braking torque, for the value of the output braking torque to fall within a range from the decreased preset value to the total energy recovery torque value.

In a possible implementation, the threshold is 0, and the total energy recovery torque value is equal to the coasting energy recovery torque value.

In a possible implementation, the threshold is greater than 0, and after the braking torque is output, the processing module 602 is further configured to: if the vehicle is still in an unstable state, adjust the threshold until the vehicle is out of the unstable state, where a threshold obtained after each adjustment is used to adjust the total energy recovery torque value.

In a possible implementation, the processing module 602 is further configured to: when the vehicle is in the unstable state, update a first threshold to a second threshold, and use the second threshold as the threshold of the braking energy recovery torque, where the first threshold is a threshold obtained after the threshold is adjusted last time, and the second threshold is less than the first threshold.

In a possible implementation, when the vehicle is out of the unstable state, the processing module 602 is further configured to: update the first threshold to a third threshold, and use the third threshold as the threshold of the braking energy recovery torque, where the first threshold is the threshold obtained after the threshold is adjusted last time, and the third threshold is greater than the first threshold.

In a second embodiment, the apparatus is specifically used in a motor controller of the vehicle.

In the second embodiment, the obtaining module 601 is configured to obtain a total energy recovery torque value, where the total energy recovery torque value is a sum of a braking energy recovery torque value and a coasting energy recovery torque value. The processing module 602 is configured to control a motor to output a braking torque, where the braking torque is determined based on the total energy recovery torque value. The processing module 602 is further configured to adjust the braking torque when the vehicle is in an unstable state, for the output braking torque to fall within a range from a preset value to the total energy recovery torque value.

In a possible implementation, after adjusting the braking torque, the processing module 602 is further configured to: if the vehicle is still in a chassis unstable state, decrease the preset value to obtain a decreased preset value; and continue to adjust the braking torque, for a value of the output braking torque to fall within a range from the decreased preset value to the total energy recovery torque value.

In a third embodiment, the apparatus is specifically used in a vehicle control unit of the vehicle.

In the second embodiment, the processing module 602 is configured to determine a threshold of a braking energy recovery torque based on a driving mode of the vehicle. The obtaining module 601 is configured to obtain a braking energy recovery torque value, where the braking energy recovery torque value is determined based on a braking request, and the braking energy recovery torque value is less than or equal to the threshold. The processing module 602 is further configured to indicate a total energy recovery torque value to the motor controller, for the motor controller to control the motor to output a braking torque, where the total energy recovery torque value is a sum of the braking energy recovery torque value and a coasting energy recovery torque value.

In a possible implementation, after determining the threshold of the braking energy recovery torque based on the driving mode of the vehicle, the processing module 602 is further configured to indicate a braking energy recovery allowable value to a chassis controller of the vehicle, where the braking energy recovery allowable value is less than or equal to the threshold. The obtaining module 601 is further configured to obtain the braking energy recovery torque value from the chassis controller, where the braking energy recovery torque value is less than or equal to the braking energy recovery allowable value.

In a possible implementation, the driving mode includes a first driving mode and a second driving mode, and the threshold includes a threshold corresponding to the first driving mode and a threshold corresponding to the second driving mode.

In a possible implementation, the first driving mode is a mode in which an energy recovery intensity is greater than a first intensity threshold, and the second driving mode is a mode in which the energy recovery intensity is less than or equal to the first intensity threshold. The threshold corresponding to the first driving mode is less than the threshold corresponding to the second driving mode.

In a possible implementation, the processing module 602 is further configured to determine the threshold based on a road surface status and the driving mode.

In a possible implementation, the threshold is greater than 0, and after indicating the total energy recovery torque value to the motor controller, the processing module 602 is further configured to: if the vehicle is still in an unstable state, adjust the threshold until the vehicle is out of the unstable state, where a threshold obtained after each adjustment is used to adjust the total energy recovery torque value.

In a possible implementation, the processing module 602 is further configured to: when the vehicle is in the unstable state, update a first threshold to a second threshold, and use the second threshold as the threshold of the braking energy recovery torque, where the first threshold is a threshold obtained after the threshold is adjusted last time, and the second threshold is less than the first threshold.

In a possible implementation, when the vehicle is out of the unstable state, the processing module 602 is further configured to: update the first threshold to a third threshold, and use the third threshold as the threshold of the braking energy recovery torque, where the first threshold is the threshold obtained after the threshold is adjusted last time, and the third threshold is greater than the first threshold.

FIG. 7 is a diagram of a structure of a braking apparatus according to another embodiment of this application. The apparatus shown in FIG. 7 may be configured to perform the method according to any one of the foregoing embodiments.

As shown in FIG. 7, the apparatus 700 in this embodiment includes a memory 701 and a processor 702. Optionally, the apparatus 700 further includes a communication interface 703 and a bus 704. A communication connection among the memory 701, the processor 702, and the communication interface 703 is implemented through the bus 704.

The memory 701 may be a read-only memory (read-only memory, ROM), a static storage device, a dynamic storage device, or a random access memory (random access memory, RAM). The memory 701 may store a program. When the program stored in the memory 701 is executed by the processor 702, the processor 702 is configured to perform the steps of the methods shown in FIG. 3 to FIG. 5.

The processor 702 may use a general-purpose central processing unit (central processing unit, CPU), a microprocessor, an application-specific integrated circuit (application-specific integrated circuit, ASIC), or one or more integrated circuits, and is configured to execute a related program, to implement the methods shown in FIG. 3 to FIG. 5 in this application.

Alternatively, the processor 702 may be an integrated circuit chip, and has a signal processing capability. In an implementation process, the steps of the methods in FIG. 3 to FIG. 5 in embodiments of this application may be completed by using an integrated logic circuit of hardware or an instruction in a form of software in the processor 702.

The processor 702 may alternatively be a general-purpose processor, a digital signal processor (digital signal processing, DSP), an application-specific integrated circuit (ASIC), a field programmable gate array (field programmable gate array, FPGA) or another programmable logic device, a discrete gate or transistor logic device, or a discrete hardware component. It may implement or perform the methods, the steps, and logical block diagrams that are disclosed in embodiments of this application. The general-purpose processor may be a microprocessor, or the processor may be any conventional processor or the like.

The steps of the methods disclosed with reference to embodiments of this application may be directly performed and completed by a hardware decoding processor, or may be performed and completed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory 701. The processor 702 reads information in the memory 701, and completes, in combination with hardware of the processor 702, a function that needs to be executed by a unit included in the apparatus in this application, for example, may perform the steps or execute the functions in the embodiments shown in FIG. 3 to FIG. 5.

The communication interface 703 may use, but is not limited to, a transceiver apparatus of a transceiver type, to implement communication between the apparatus 700 and another device or a communication network.

The bus 704 may include a path for transferring information between components (such as the memory 701, the processor 702, and the communication interface 703) of the apparatus 700.

The apparatus 700 shown in this embodiment of this application may be an electronic device or may be a chip configured in an electronic device.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

The term "and/or" in this specification describes only an association relationship between associated objects and indicates that three relationships may exist. For example, A and/or B may indicate the following three cases: Only A exists, both A and B exist, and only B exists, where A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including a single item (piece) or any combination of a plurality of items (pieces). For example, at least one of a, b, or c may indicate: a, b, c, a-b, a-c, b-c, or a-b-c, where a, b, and c may be singular or plural.

Sequence numbers of the foregoing processes do not mean execution sequences in embodiments of this application. The execution sequences of the processes should be determined based on functions and internal logic of the processes, and should not be construed as any limitation on the implementation processes of embodiments of this application.

A person of ordinary skill in the art may be aware that, units and algorithm steps in the examples described with reference to embodiments disclosed in this specification can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments provided in this application, it should be understood as that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions in embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

## Claims

1. A braking method, applied to a vehicle, wherein the method comprises:
determining a threshold of a braking energy recovery torque based on a driving mode of the vehicle;
obtaining a braking request;
determining a braking energy recovery torque value based on the braking request, wherein the braking energy recovery torque value is less than or equal to the threshold; and
outputting a braking torque, wherein the braking torque is determined based on a total energy recovery torque value, and the total energy recovery torque value is a sum of the braking energy recovery torque value and a coasting capability recovery torque value.

2. The method according to claim 1, wherein determining the braking energy recovery torque value based on the braking request comprises:
determining a braking energy recovery allowable value, wherein the braking energy recovery allowable value is less than or equal to the threshold; and
determining the braking energy recovery torque value based on the braking request, wherein the braking energy recovery torque value is less than or equal to the braking energy recovery allowable value.

3. The method according to claim 1 or 2, wherein the driving mode comprises a first driving mode and a second driving mode, and the threshold comprises a threshold corresponding to the first driving mode and a threshold corresponding to the second driving mode.

4. The method according to claim 3, wherein the first driving mode is a driving mode in which an energy recovery intensity is greater than a first intensity threshold, the second driving mode is a driving mode in which the energy recovery intensity is less than or equal to the first intensity threshold, and the threshold corresponding to the first driving mode is less than the threshold corresponding to the second driving mode.

5. The method according to any one of claims 1 to 4, wherein determining the threshold of the braking energy recovery torque based on the driving mode of the vehicle comprises:
determining the threshold based on a road surface status and the driving mode.

6. The method according to any one of claims 1 to 5, wherein when the vehicle is in an unstable state, the method further comprises:
adjusting the braking torque, for the output braking torque to fall within a range from a preset value to the total energy recovery torque value.

7. The method according to claim 6, wherein the method further comprises:
if the vehicle is still in the unstable state, decreasing the preset value to obtain a decreased preset value; and
adjusting the braking torque, for a value of the output braking torque to fall within a range from the decreased preset value to the total energy recovery torque value.

8. The method according to claim 6 or 7, wherein the threshold is 0, and the total energy recovery torque value is equal to the coasting energy recovery torque value.

9. The method according to any one of claims 1 to 7, wherein the threshold is greater than 0, and after outputting the braking torque, the method further comprises:
if the vehicle is still in the unstable state, adjusting the threshold until the vehicle is out of the unstable state, wherein a threshold obtained after each adjustment is used to adjust the total energy recovery torque value.

10. The method according to claim 9, wherein determining the threshold of the braking energy recovery torque based on the driving mode of the vehicle comprises:
when the vehicle is in the unstable state, updating a first threshold to a second threshold, and using the second threshold as the threshold of the braking energy recovery torque, wherein the first threshold is a threshold obtained after the threshold is adjusted last time, and the second threshold is less than the first threshold.

11. The method according to claim 10, wherein when the vehicle is out of the unstable state, determining the threshold of the braking energy recovery torque based on the driving mode of the vehicle comprises:
updating the first threshold to a third threshold, and using the third threshold as the threshold of the braking energy recovery torque, wherein the first threshold is the threshold obtained after the threshold is adjusted last time, and the third threshold is greater than the first threshold.

12. A braking method, applied to a motor controller, wherein the motor controller is configured in a vehicle, and the method comprises:
obtaining a total energy recovery torque value, wherein the total energy recovery torque value is a sum of a braking energy recovery torque value and a coasting energy recovery torque value;
controlling a motor to output a braking torque, wherein the braking torque is determined based on the total energy recovery torque value; and
adjusting the braking torque when the vehicle is in an unstable state, for the output braking torque to fall within a range from a preset value to the total energy recovery torque value.

13. The method according to claim 12, wherein the method further comprises:
if the vehicle is still in the unstable state, decreasing the preset value to obtain a decreased preset value; and
adjusting the braking torque, for a value of the output braking torque to fall within a range from the decreased preset value to the total energy recovery torque value.

14. A braking method, applied to a vehicle control unit, wherein the vehicle control unit is configured in a vehicle, and the method comprises:
determining a threshold of a braking energy recovery torque based on a driving mode of the vehicle;
obtaining a braking energy recovery torque value, wherein the braking energy recovery torque value is determined based on a braking request, and the braking energy recovery torque value is less than or equal to the threshold; and
indicating a total energy recovery torque value to a motor controller, for the motor controller to control a motor to output a braking torque, wherein the total energy recovery torque value is a sum of the braking energy recovery torque value and a coasting energy recovery torque value.

15. The method according to claim 14, wherein after determining the threshold of the braking energy recovery torque based on the driving mode of the vehicle, the method further comprises:
indicating a braking energy recovery allowable value to a chassis controller of the vehicle, wherein the braking energy recovery allowable value is less than or equal to the threshold; and
obtaining the braking energy recovery torque value comprises:
obtaining the braking energy recovery torque value from the chassis controller, wherein the braking energy recovery torque value is less than or equal to the braking energy recovery allowable value.

16. The method according to claim 14 or 15, wherein the driving mode comprises a first driving mode and a second driving mode, and the threshold comprises a threshold corresponding to the first driving mode and a threshold corresponding to the second driving mode.

17. The method according to any one of claims 14 to 16, wherein the first driving mode is a mode in which an energy recovery intensity is greater than a first intensity threshold, the second driving mode is a mode in which the energy recovery intensity is less than or equal to the first intensity threshold, and the threshold corresponding to the first driving mode is less than the threshold corresponding to the second driving mode.

18. The method according to any one of claims 14 to 17, wherein determining the threshold of the braking energy recovery torque based on the driving mode of the vehicle comprises:
determining the threshold based on a road surface status and the driving mode.

19. The method according to any one of claims 14 to 18, wherein the threshold is greater than 0, and after indicating the total energy recovery torque value to the motor controller, the method further comprises:
if the vehicle is still in an unstable state, adjusting the threshold until the vehicle is out of the unstable state, wherein a threshold obtained after each adjustment is used to adjust the total energy recovery torque value.

20. The method according to claim 19, wherein determining the threshold of the braking energy recovery torque based on the driving mode of the vehicle comprises:
when the vehicle is in the unstable state, updating a first threshold to a second threshold, and using the second threshold as the threshold of the braking energy recovery torque, wherein the first threshold is a threshold obtained after the threshold is adjusted last time, and the second threshold is less than the first threshold.

21. The method according to claim 20, wherein when the vehicle is out of the unstable state, determining the threshold of the braking energy recovery torque based on the driving mode of the vehicle comprises:
updating the first threshold to a third threshold, and using the third threshold as the threshold of the braking energy recovery torque, wherein the first threshold is the threshold obtained after the threshold is adjusted last time, and the third threshold is greater than the first threshold.

22. A braking apparatus, comprising a module configured to perform the method according to any one of claims 1 to 11, or comprising a module configured to perform the method according to claim 12 or 13, or comprising a module configured to perform the method according to any one of claims 14 to 21.

23. A braking apparatus, comprising a processor, wherein the processor is coupled to a memory, the memory is configured to store instructions, and when the instructions are executed by the processor, the apparatus is enabled to perform the method according to any one of claims 1 to 11, or perform the method according to claim 12 or 13, or perform the method according to any one of claims 14 to 21.

24. A vehicle, comprising the braking apparatus according to claim 22 or 23.

25. A computer-readable storage medium, wherein the computer-readable storage medium stores a computer program, and when the computer program is executed, the method according to any one of claims 1 to 11 is performed, or the method according to claim 12 or 13 is performed, or the method according to any one of claims 14 to 21 is performed.

26. A computer program product, comprising a computer program, wherein when the computer program is run, the method according to any one of claims 1 to 11 is performed, or the method according to claim 12 or 13 is performed, or the method according to any one of claims 14 to 21 is performed.
